# EUROPÄISCHE PATENTSCHRIFT

(11) **EP 0 545 285 B1**
(45) Veröffentlichungstag und Bekanntmachung des Hinweises auf die Patenterteilung: **15.05.1996**
(21) Anmeldenummer: 92120179.4
(22) Anmeldetag: 26.11.1992
(51) Int. Cl.: B65G 1/02, B65G 13/12

(54) **Rollenförderbahn**
Roller conveyor
Convoyeur à rouleaux

(30) Priorität: 06.12.1991 CH 3595/91
(43) Veröffentlichungstag der Anmeldung: 09.06.1993
(73) Patentinhaber: Arox AG, CH-6284 Sulz (CH)
(72) Erfinder: Kolb, Josef, CH-6284 Sulz (CH)
(74) Vertreter: Blum, Rudolf Emil Ernst

(56) Entgegenhaltungen:
- EP-A- 0 343 837
- US-A- 2 262 443
- US-A- 3 263 951
- US-A- 3 869 031

## Beschreibung

Die Erfindung betrifft eine Rollenförderbahn, zum Fördern von Stückgütern, mit Rahmen zum Tragen von Förderrollen in einer Ebene, wobei eine Vielzahl von einzelnen Rahmen vorhanden ist, die aneinandergereiht sind, und mit einem Traggestell zum Tragen der aneinandergereihten Rahmen.

Eine solche Rollenförderbahn kann z.B. bei einem sogenannten Fliesslager vorhanden sein, bei dem die Stückgüter (Lagergut) selbständig über die geneigte Rollenförderbahn zur Entnahmestelle laufen. Ein solches Fliesslager kann in einer Lagerhalle eine beträchtliche Höhe aufweisen, wobei also ein Gabelstapler in das jeweilige Stockwert hochfährt, um das zuvorderst liegende Stückgut zu entnehmen. Um in jedem Stockwerk eine geneigte Rollenförderbahn zu erhalten, müssen die einzelnen aneinandergereihten Rahmen für die Förderrollen geneigt am Traggestell angebracht werden. Es ist hierzu z.B. aus der US-A-3.869.031 bekannt, die Rahmen an Querträgern des Gestells zu befestigen, wobei an den den Querträgern gegenüber der Horizontalen geneigte Befestigungsplatten befestigt werden. Durch diese geneigten Befestigungsplatten erhalten die Rahmen die erwähnte geneigte Lage. Die Neigung einer solchen Rollenförderbahn beträgt z.B. 4 %. Eine solche bekannte Rollenförderbahn weist verschiedene Nachteile auf. Das Befestigen jeder Befestigungsplatte an einem zugeordneten Querträger mit der vorerwähnten Neigung ist zeitaufwendig und bedarf oft einer nachträglichen Justierarbeit zum Einhalten der gewünschten Neigung. Wird zum Einhalten dieser Neigung ein entsprechend geformter Keil unter die Befestigungsplatte gelegt, müssen diese zusätzlichen Keile hergestellt werden. Werden anstelle dieser Keile Justierschrauben verwendet (US-A-3.869.031) muss eine aufwendige Justierarbeit über die ganze Länge der Rollenförderbahn durchgeführt werden. Auch bei kostenmässig vertretbaren Toleranzen kann nicht vermieden werden, dass beim Festschrauben der Rahmen an den Befestigungsplatten der die Förderrollen tragende Rahmen etwas verwunden und damit verspannt wird. Ein solches Verwinden der aneinandergereihten Rahmen ergibt eine nicht genau ebene Förderfläche für die Stückgüter, so dass kein sanfter Uebergang eines Stückgutes von einem Rahmen zum anderen Rahmen gewährleistet ist. Hierdurch ergeben sich Schläge auf die Rollenförderbahn, die den Lärmpegel erhöhen. Um letzteres zu mildern, wurde schon vorgeschlagen, zwischen Befestigungsplatte und Rahmen ein Gummipolster anzuordnen. Hierdurch können durch die erwähnten Schläge auftretende Vibrationen gedämpft werden, aber der Uebergang von einem Rahmen zum anderen kann hierdurch nicht egalisiert werden. Wenn man berücksichtigt, dass ein von einer Palette getragenes Stückgut z.B. 1000 kg wiegen kann, zusätzlich die Unterseite der Palette durch Beschädigung keine saubere Ebene bildet, können beim Uebergang des Stückgutes von einem Rahmen zum anderen erhebliche Stösse auftreten, die auch von den zusätzlichen Gummiunterlagen nicht problemlos, d.h. ohne Auswirkung auf das ganze Traggestell, aufgenommen werden können.

Es wird die Schaffung einer Rollenförderbahn bezweckt, bei der die vorerwähnten Nachteile vermieden werden können.

Die erfindungsgemässe Ausbildung der Rollenförderbahn ergibt sich aus dem kennzeichnenden Teil des Patentanspruchs 1.

Aus der US-A-3.263.951 ist bereits eine Rollenförderbahn bekannt, bei der aus Justiergründen schwenkbare Anschlussplatten zwischen Traggestell und Rahmen vorhanden sind. Die Schwenkebenen dieser Anschlussplatten liegen ebenfalls parallel zur Richtung der aneinandergereihten Rahmen. Diese Anschlussplatten werden bei der Justierarbeit mittels Schrauben unschwenkbar festgezogen und können beim Betrieb der Rollenförderbahn nicht als Wippen zwischen benachbarten Rahmen dienen und können somit nicht die gestellte Aufgabe erfüllen.

In der Zeichnung ist ein Ausführungsbeispiel des Erfindungsgegenstandes dargestellt. Es zeigen:
Figur 1 eine schematische Draufsicht auf ein Stück einer Rollenförderbahn,
Figur 2 eine Seitenansicht auf eine Wippe, und
Figur 3 die in Figur 2 gezeigte Wippe in einer um 90° gedrehten Ansicht.

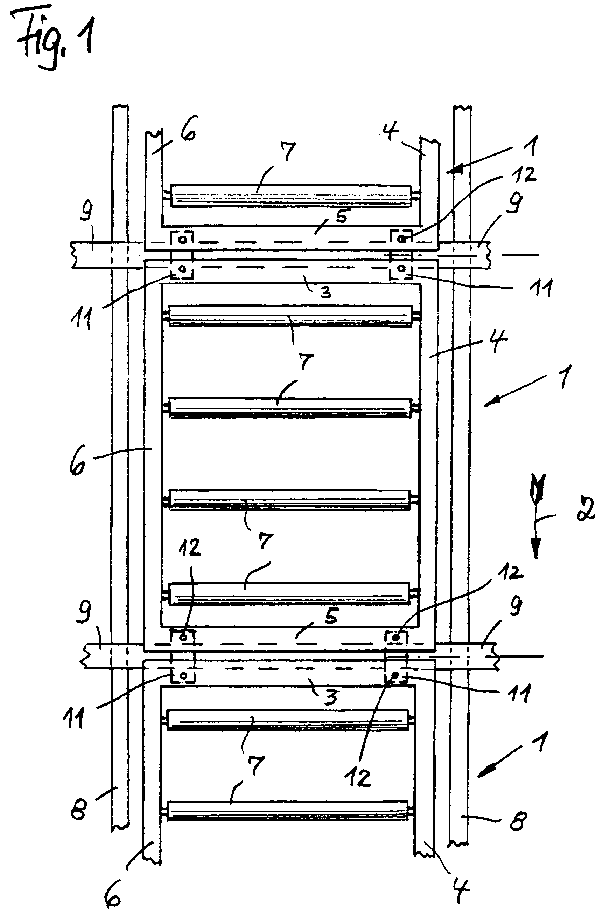

Die in Figur 1 gezeigte Rollenförderbahn hat eine Vielzahl von Rahmen 1, die in Förderrichtung 2 aneinandergereiht sind. Jeder Rahmen 1 hat Rahmenholme 3-6. In den einander gegenüberliegenden Rahmenholmen 4 und 6 sind die Förderrollen 7 drehbar gelagert. Die Rahmen 1 mit ihren Förderrollen 7 werden von einem Traggestell getragen, das aus Längsträgern 8, Querträgern 9 und vertikalen Trägern 10 aufgebaut ist. Diese Träger 8-10 bilden zusammen ein stabiles Gestell, z.B. eines Fliesslagers, das sich in einer Lagerhalle befindet.

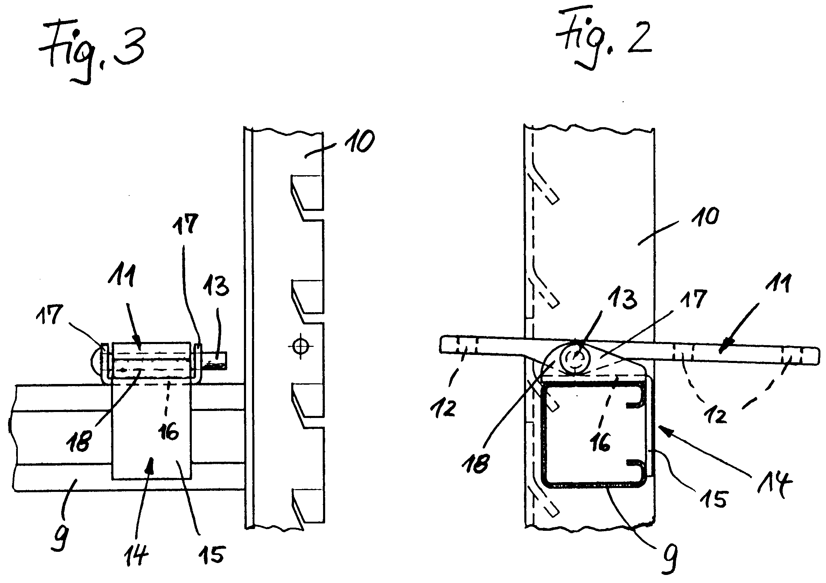

Die Rahmen 1 sind nunmehr mittels Wippen 11 am Traggestell befestigt, und zwar so, dass jede Wippe 11 an einem zugeordneten Querträger 9 abgestützt ist. Jede Wippe ist ein zweiarmiger Kipphebel, wobei der eine Arm am Rahmenholmen 3 und der andere Arm am Rahmenholmen 5 befestigt ist, z.B. durch Verschraubung. Bei der Konstruktionszeichnung nach Figur 2 ist die Wippe mit drei Befestigungslöchern 12 versehen, die in der Praxis als Langlöcher ausgebildet sind, wobei die Längenerstreckung jedes Langloches parallel zum Verlauf des Querträgers 9 ist. Bei der schematischen Darstellung nach Figur 1 sind hierfür lediglich die Löcher 12 angegeben. Bei der Darstellung nach Figur 2 verläuft die Wippebene in der Zeichenblattebene, und in der Darstellung nach den Figuren 1 und 3 steht die Wippebene rechtwinklig zur Zeichenblattebene. Weiterhin verlaufen alle Wippebenen parallel zur Förderrichtung 2.

Jede Wippe 11 ist mittels einer Schwenkachse 13 in einem Wippenlager 14 schwenkbar gelagert. Das Wippenlager 14 kann am Querträger 9 lösbar oder unlösbar befestigt sein. Je nach Kundenwunsch wurde deshalb eine solche Konstruktion des Wippenlagers gewählt, dass beide Befestigungsarten möglich sind. Das Wippenlager hat zwei L-förmige Schenkel 15,16, wobei vom Schenkel 16 zwei Lagerwangen 17 nach oben ragen. Die beiden Schenkel 15 und 16 liegen am Querträger 9 an. Wird eine unlösbare Befestigung des Wippenlagers 14 am Querträger 9 gewünscht, so wird das freie Ende des Schenkels 15 am Querträger 9 angeschweisst und weiterhin werden noch die beiden Lagerwangen 17 an den Querträger 9 angeschweisst. Wird eine lösbare Befestigung des Wippenlagers 14 am Querträger 9 gewünscht, so erhält der Schenkel 15 eine Durchgangsbohrung für eine Klemmschraube, wobei im Innern des Querträgers 9 eine nicht dargestellt Klemmplatte mit Gewindebohrung angebracht wird; der Querträger 9 ist hierbei als C-Profil ausgebildet, wie aus Figur 2 ersichtlich ist. Die beiden Lagerwangen 17 sind von der Schwenkachse 13 durchsetzt. Jede Wippe 11 ist mit einem Lagerauge 18 für die Lagerung der Schwenkachse 13 versehen, wobei die Schwenkachse mit radialem Spiel im Lagerauge sitzt, d.h. die Bohrung des Lagerauges ist also grösser als der Durchmesser der Schwenkachse 13. Weiterhin ist der gegenseitige lichte Abstand der beiden Lagerwangen 17 grösser als die Breite der Wippe, wie aus Figur 3 ersichtlich ist. Durch letzteres erhält die Wippe einen Bewegungsfreiheitsgrad quer zur Wippebene. Da auch die Schwenkachse 13 mit Spiel im Lagerauge 18 sitzt, kann das Lagerauge 18 direkt über den Schenkel 16 des Wippenlagers 14 am Querträger 9 abgestützt werden. Letzteres ist wichtig, wenn man das bereits erwähnte hohe Gewicht eines Stückgutes in Betracht zieht. Letzteres wird auch erzielt, wenn die Schwenkachse 13 mit radialem Spiel in den Lagerwangen 17 liegt.

Bei der Montage der Rollenförderbahn kann z.B. so vorgegangen werden, dass zuerst die Wippen 11 am Querträger 9 befestigt werden, so wie es aus den Figuren 2 und 3 ersichtlich ist. Dann werden die Rahmen 1 auf die Wippen aufgelegt und mit diesen verschraubt. Die Rahmen 1 sind natürlich vorher schon mit ihren Förderrollen bestückt worden. Durch die mehreren Freiheitsgrade, die die Wippe 11 gegenüber dem Traggestell 8-10 aufweist, können die Rahmen 1 durch das Festschrauben an den Wippen nicht mehr verwunden und damit nicht mehr verspannt werden. An einer Wippe 11 ist somit der Rahmenholmen 3 des einen Rahmens und der Rahmenholmen 5 des benachbarten Rahmens festgeschraubt.

Die aus Figur 2 ersichtliche unterschiedliche Länge der beiden Wippenarme ist lediglich eine Sparmassnahme (um nur eine Wippenart auf Lager halten zu müssen), da dieselbe Wippe 11 auch für das nicht dargestellte Ende der Rollenförderbahn verwendet wird, so dass also nur noch ein Arm, und zwar der längere Arm, für den letzten Rahmen 1 benutzt wird; der kürzere Wippenarm wird abgetrennt. Das nicht dargestellte Ende der Rollenförderbahn, und zwar das Entnahmeende, ist in der bei Fliesslagern bekannten Weise gegabelt ausgebildet, d.h. es sind anstelle eines Rahmens 1 drei schmale nebeneinanderliegende, nicht dargestellte Rahmen vorhanden, damit ein Gabelstapler zwischen diese drei nebeneinanderliegenden Rahmen einfahren kann, um die Palette mit dem Stückgut abzuheben. Auch diese zuletzt erwähnten schmalen Rahmen können wiederum auf solchen Wippen 11 gelagert sein.

Beim Arbeiten mit der erläuterten Rollenförderbahn kann sich jeder Rahmen entsprechend dem ankommenden Stückgut durch Arbeiten der Wippen ideal anpassen, so dass eine problemlose Uebergabe von einem Rahmen zum anderen erfolgt, wodurch ein sehr geräuscharmes Arbeiten eintritt. Es hat sich auch herausgestellt, dass durch die Anbringung der Wippen 11 die die Stückgüter tragenden Paletten nach einem Halt viel leichter als bisher wieder anlaufen.

## Patentansprüche

1. Rollenförderbahn, zum Fördern von Stückgütern, mit einem Rahmen (1) zum Tragen von Förderrollen (7) in einer Ebene, wobei eine Vielzahl von einzelnen Rahmen (1) vorhanden ist, die aneinandergereiht sind, und mit einem Traggestell (8-10) zum Tragen der aneinandergereihten Rahmen (1), dadurch gekennzeichnet, dass die Rahmen (1) mittels Wippen (11) am Traggestell (8-10) befestigt sind, wobei die Wippebenen parallel zur Richtung (2) der aneinandergereihten Rahmen (1) liegen, dass jede Wippe (11) mittels einer Schwenkachse (13) in einem Wippenlager (14) schwenkbar gelagert ist, dass das Wippenlager (14) zwei aufrechte Lagerwangen (17) aufweist, die von der Schwenkachse (13) durchsetzt sind, und dass der gegenseitige lichte Abstand der beiden Lagerwangen (17) grösser ist als die Wippenbreite um der Wippe (11) einen Bewegungsfreiheitsgrad zu verschaffen quer zur Wippebene.

2. Rollenförderbahn nach Anspruch 1, dadurch gekennzeichnet, dass jede Wippe (11) zwei Wippenarme aufweist, und jede Wippe zwischen benachbarten Rahmen (1) so angeordnet ist, dass der eine Wippenarm an dem einen Rahmen und der andere Wippenarm am benachbarten Rahmen befestigt ist.

3. Rollenförderbahn nach Anspruch 1 oder 2, wobei das Traggestell Längsträger (8) und Querträger (9) aufweist, wobei sich die Längsträger (8) parallel zur Richtung der aneinandergereihten Rahmen (1) erstrecken, dadurch gekennzeichnet, dass die Wippen (11) auf den Querträgern (9) befestigt sind.

4. Rollenförderbahn nach Anspruch 1, dadurch gekennzeichnet, dass das Wippenlager (14) lösbar an einem Querträger (9) befestigt ist, so dass es entlang dem Querträger an veränderlichen Stellen daran befestigbar ist.

5. Rollenförderbahn nach einem der Ansprüche 1-4, dadurch gekennzeichnet, dass jede Wippe (11) ein Lagerauge (18) für die Schwenkachse (13) aufweist und dass die Schwenkachse (13) mit radialem Spiel im Lagerauge (18) und/oder Wippenlager (14) sitzt, so dass das Lagerauge (18) auf einer darunter befindlichen Auflage (16) von Wippenlager (14) oder Querträger (9) aufliegen kann.

6. Verwendung der Rollenförderbahn nach einem der vorangehenden Ansprüche 1-5 bei einem Fliesslager.

## Claims

1. Roller conveyor, for the transporting of parcelled goods, with a frame (1) for supporting transporting rollers (7) in a plane, whereby a plurality of individual frames (1) is present which are lined up, and with a supporting structure (8 - 10) for a supporting of the lined-up frames (1), characterized in that the frames (1) are mounted by means of balances (11) at the supporting structure (8 - 10), whereby the balancing planes are arranged parallel to the direction (2) of the lined-up frames (1), that each balance (11) is pivotably supported in a balance support (14) by means of a pivot axis (13), that the balance support (14) includes two upright supporting side plates (17) which are penetrated by the pivot axis (13), and that the mutual free distance between the two side plates (17) is larger than the width of the balance (11) in order to provide the balance (11) with a degree of freedom of movement laterally to the balance plane.

2. Roller conveyor according to claim 1, characterized in that each balance (11) comprises two balance arms, and each balance is arranged between adjacent frames (1) in such a manner that one of the balance arms is mounted to the one frame and the other balance arm to the adjacent frame.

3. Roller conveyor according to claim 1 or 2, whereby the supporting structure includes longitudinal beams (8) and crossbeams (9), whereby the longitudinal beams (8) extend parallel to the direction of the lined-up frames (1), characterized in that the balances (11) are mounted on the crossbeams (9).

4. Roller conveyor according to claim 1, characterized in that the balance support (14) is releasably mounted to a crossbeam (9), so that it can be mounted thereto at several locations along the crossbeam.

5. Roller conveyor according to one of the claims 1 - 4, characterized in that each balance (11) includes a bearing eyelet (18) for the pivot axis (13), and that the pivot axis (13) is seated with a radial play in the bearing eyelet (18) and/or the balance support (14), so that the bearing eyelet (18) can rest upon a support (16) of the balance support (14) or crossbeam (9) located underneath.

6. Use of the roller conveyor according to one of the preceding claims 1 - 5 at a conveyor storage structure.

## Revendications

1. Convoyeur à rouleaux pour convoyer des pièces de marchandise, avec un cadre (1) portant des rouleaux (7) agencés dans un plan, un grand nombre de cadres (1) individuels étant mutuellement alignés les uns à la suite des autres, et avec un châssis porteur (8 - 10) supportant les cadres alignés (1), caractérisé en ce que les cadres (1) sont fixés au châssis porteur (8 - 10) par des bascules (11), les plans des bascules étant parallèles à l'orientation (2) des cadres alignés (1), chaque bascule (11) étant montée de façon à pouvoir basculer par l'intermédiaire d'un axe (13) dans un palier (14) comportant deux flasques verticaux (17) traversés par l'axe (13), l'intervalle libre entre ces deux flasques (17) étant supérieur à la largeur de la bascule (11) afin de laisser à celle-ci un degré de liberté transversal au plan de basculement.

2. Convoyeur à rouleaux selon la revendication 1, caractérisé en ce que chaque bascule (11) comporte deux bras et est agencée entre des cadres successifs (1) de manière à ce qu'un de ses bras soit fixé à un cadre et son autre bras au cadre voisin.

3. Convoyeur à rouleaux selon une des revendications 1 ou 2, le châssis porteur comportant des poutres longitudinales (8) et des poutres transversales (9), les poutres longitudinales (8) s'étendant parallèlement à la direction des cadres (1) alignés les uns à la suite des autres, caractérisé en ce que les bascules (11) sont fixées sur les poutres transversales (9).

4. Convoyeur à rouleaux selon la revendication 1, caractérisé en ce que le palier (14) est fixé de manière démontable à une poutre transversale (9) de façon à pouvoir être maintenu en différents endroits le long de celle-ci.

5. Convoyeur à rouleaux selon une des revendications 1 à 4, caractérisé en ce que chaque bascule (11) comporte une ouverture (18) formant palier pour l'axe de basculement (13), et que ce dernier possède un jeu radial dans l'ouverture (18) et/ou dans le palier (14), de façon à ce que l'ouverture (18) puisse reposer sur une surface (16), située sous elle, du palier (14) ou de la poutre transversale (9).

6. Utilisation du convoyeur à rouleaux selon une des revendications 1 à 5 dans une unité de stockage en continu.
